# EUROPÄISCHE PATENTSCHRIFT

(11) **EP 3 733 307 B1**
(45) Veröffentlichungstag und Bekanntmachung des Hinweises auf die Patenterteilung: **31.07.2024**
(21) Anmeldenummer: 19208738.5
(22) Anmeldetag: 12.11.2019
(51) Int. Cl.: B05D 5/02, B05D 3/04, A46B 13/00, B05D 3/12, B05D 3/00, A46B 5/06, B44C 1/22, B24B 7/18, B24B 29/00, B05D 3/06, B08B 3/02, B08B 5/02, B24C 1/04, B24C 3/08, B24C 9/00, B08B 7/00, B08B 15/04, B08B 1/20, B08B 1/30

(54) **VERFAHREN UND VORRICHTUNG ZUR ERZEUGUNG EINER DEKORATIVEN OBERFLÄCHE**
METHOD AND DEVICE FOR PRODUCING A DECORATIVE SURFACE
PROCÉDÉ ET DISPOSITIF DE PRODUCTION D'UNE SURFACE DÉCORATIVE

(30) Priorität: 03.05.2019 DE 102019206431
(43) Veröffentlichungstag der Anmeldung: 04.11.2020
(73) Patentinhaber: Hymmen GmbH Maschinen- und Anlagenbau, 33613 Bielefeld (DE)
(72) Erfinder:
(74) Vertreter: Prüfer & Partner mbB Patentanwälte · Rechtsanwälte

(56) Entgegenhaltungen:
- EP-A1- 3 109 056
- EP-A1- 3 415 316
- EP-A2- 1 101 542
- WO-A1-2018/069874
- DE-A1- 3 331 391
- US-A1- 2007 235 410
- US-A1- 2016 114 619

## Beschreibung

Die vorliegende Erfindung bezieht sich auf ein Verfahren und eine Vorrichtung zum Bearbeiten einer Oberfläche eines Werkstückes, insbesondere zum Herstellen einer dekorativen Oberfläche.

Zur Herstellung von dekorativen Oberflächen im industriellen Maßstab, die beispielsweise die Nachbildung von Fliesen- oder Holzoberflächen zum Ziel haben, werden neben einer Schicht, die die spätere Oberfläche bildet, auch temporär weitere Manipulationsmittel aufgebracht, um die Oberfläche der Schicht zu manipulieren, so dass schließlich die dekorative Oberfläche erzeugt werden kann.

Die EP 3 109 056 A1 beschreibt beispielsweise ein Verfahren zum Herstellen einer Struktur auf einer Oberfläche. Dazu wird eine flüssige Schicht auf ein Werkstück aufgetragen. Anschließend wird ein Manipulationsmittel in Form von Tröpfchen auf die flüssige Schicht aufgespritzt, wobei durch die Tröpfchen eine Verdrängung der flüssigen Schicht stattfindet, so dass sich darin Vertiefungen bilden, die zusammen eine Struktur in der flüssigen Schicht bilden. Anschließend wird diese Schicht fixiert. Auf diese Weise kann eine Oberfläche auf der Schicht erzeugt werden, die beispielsweise eine Holz- oder Fliesenoptik aufweist.

Die EP 3 415 316 A1 offenbart ein Verfahren, bei dem ein Manipulationsmittel auf die flüssige Schicht in Form von Tröpfchen oder feinen Tröpfchen aufgebracht wird, wobei das Manipulationsmittel die Eigenschaft aufweist, elektromagnetische Strahlung zumindest teilweise zu absorbieren. Bei Bestrahlung der flüssigen Schicht beispielsweise mit einem Excimer-Laser erfolgt eine Polymerisation an der Oberfläche der flüssigen Schicht die dort eine Mikrofaltung bewirkt, die später eine matte Oberfläche zum Ergebnis hat. Das Manipulationsmittel auf der Oberfläche der flüssigen Schicht absorbiert dabei die Strahlung zumindest teilweise, so dass die Polymerisation hier weniger stark stattfindet. Diese Bereiche sind im Ergebnis glänzender als die Bereiche, auf denen sich kein Manipulationsmittel befand.

Die US 2016 / 0 114 619 A1 zeigt mehrere Verfahren und Vorrichtungen zum Herstellen strukturierter Oberflächen. Dabei wird insbesondere ein Herstellungsschritt offenbart, bei dem Teile der Oberfläche einer synthetischen Materialschicht oder eines aufgebrachten Manipulationsmittels mittels Absaugung entfernt werden.

Bei den bekannten Verfahren muss nach der Durchführung des Verfahrens das temporär aufgebrachte Manipulationsmittel wieder entfernt werden. Hier besteht das Problem, dass das Manipulationsmittel, insbesondere wenn es mit der Schicht eine Verbindung eingegangen ist, zuverlässig und möglichst restlos entfernt werden muss. Es ist daher Aufgabe der vorliegenden Erfindung dieses Problem zu lösen.

Ein weiteres Ziel dieser vorliegenden Erfindung ist es, ein teilweises Entfernen der zuvor aufgebrachten Schicht zu ermöglichen, insbesondere an den Stellen, an denen das Manipulationsmittel aufgebracht wurde.

Diese Aufgabe wird durch die Gegenstände der unabhängigen Ansprüche gelöst. Vorteilhafte Weiterbildungen sind Gegenstand der Unteransprüche.

Es wird somit ein Manipulationsmittel auf und/oder in eine zumindest teilweise flüssige Schicht aufgebracht, die sich auf einem Werkstück befindet.

Das Aufbringen des Manipulationsmittels erfolgt dabei bevorzugt auf Teilflächen oder Teilbereiche der flüssigen Schicht und/oder des Werkstückes. Im weiteren Verlauf des Verfahrens werden Teile der Schicht entfernt. Die Entfernung erfolgt mechanisch und/oder berührungslos, insbesondere fluidisch.

Erfindungsgemäß wird die Schicht, bevor das Entfernen von Teilen der Schicht durchgeführt wird, zusammen mit dem Manipulationsmittel zumindest teilweise ausgehärtet, so dass insbesondere die Viskosität der Schicht zunimmt.

Diese Verfahrensschritte können in einem Verfahren zur Herstellung einer dekorativen Oberfläche auf einem Werkstück vorgesehen sein. Zwischen der Durchführung des Entfernens von Teilen der Schicht und den zuvor durchgeführten Verfahrensschritten kann jedoch auch eine zeitliche Pause liegen, so dass es sich, insbesondere bei dem Entfernen von Teilen der Schicht, auch um ein eigenständiges Verfahren handeln kann.

Vorzugsweise umfassen die Teile der Schicht, die entfernt werden, auch Teile des sich auf oder in der Schicht befindlichen Manipulationsmittels. In einer speziellen Ausführungsform handelt es sich dabei ausschließlich um das Manipulationsmittel. Wird das Manipulationsmittel von der Schicht entfernt, so kann dies teilweise erfolgen, so dass ein Rest des Manipulationsmittels auf und/oder in der Schicht zurückbleibt. Das Entfernen kann jedoch auch vollständig erfolgen, dass das Manipulationsmittel restlos entfernt wird.

Somit kann das Entfernen von Teilen der Schicht, bedeuten, dass Material der Schicht selbst entfernt wird. Alternativ kann auch ausschließlich das Manipulationsmittel von der Schicht entfernt werden. Es kann jedoch auch beides, also Material der Schicht selbst und Material des Manipulationsmittels entfernt werden.

Vorzugsweise erfolgt das mechanische Entfernen von Teilen der Schicht mit einer Entfernungsvorrichtung, die ein Kontaktelement aufweist, das mit der Oberfläche der Schicht in Kontakt steht, wobei sich die Oberfläche der Schicht und das Kontaktelement beim Entfernen relativ zueinander bewegen. Neben einer gegenläufigen Bewegung kann auch eine gleichläufige Bewegung oder eine anders ausgebildete Relativbewegung stattfinden.

Vorzugsweise weist das Kontaktelement eine stehende und/oder eine bewegte Bürste und/oder ein Schleif- und/oder ein Hobelelement auf, wobei das Kontaktelement bewegt oder stehend gegenüber dem Werkstück vorgesehen ist. Vorzugsweise weist die Bürste zumindest als bewegte Bürste eine Tellerbürste und/oder eine Walzenbürste und/oder ein Bürstenband und/oder als stehende Bürste einen Balken mit Bürstenbesatz auf.

Das Schleif- und/oder Hobelelement ist vorzugsweise dazu ausgebildet, Teile der Schicht wieder abzutragen, um darin eingeschlossenes Manipulationsmittel freizulegen. Anschließend kann das Manipulationsmittel mittels des Schleif- und/oder Hobelelements oder mittels anderer hier beschriebener Verfahren entfernt werden. Das Schleifelement kann bevorzugt einen Bandschleifer umfassen.

Allgemein kann das Kontaktelement ein stehendes und/oder ein bewegtes Element aufweisen. Das Kontaktelement ist weiter bevorzugt als zyklisch arbeitendes Kontaktelement ausgebildet, das beispielsweise ein Schleifband oder eine Walzenbürste aufweist. Dadurch weist das Kontaktelement vorteilhafterweise Abschnitte auf, die während des Entfernens zyklisch nicht mit der Schicht in Kontakt stehen. Diese Abschnitte können in diesem Moment gereinigt werden, wie weiter unten beschrieben wird.

Vorzugsweise weist das Kontaktelement, insbesondere die Bürste, Textil- und/oder Kunststofffasern, insbesondere Nylonfasern, und/oder Metall, insbesondere Stahl, Messing oder Kupfer auf. Darüber hinaus können auch Fasern zum Einsatz kommen, die ein Schleifmittel enthalten. Dabei handelt es sich vorzugsweise um Fasern mit Anderlon. Diese Fasern oder Materialien sind bevorzugt in den Borsten der Bürste enthalten. Somit sind insbesondere Ausbildungen der Bürste mit Metall- oder Kunststoffborsten möglich.

Die Bürste weist vorzugsweise Borsten auf, die einen Durchmesser von 0,05 bis 2 mm, vorzugsweise 0,1 bis 1,2 mm, weiter vorzugsweise 0,2 bis 0,7 mm, besonders bevorzugt 0,2 bis 0,3 mm, aufweisen.

Vorzugsweise umfasst das Entfernen von Teilen der Schicht eine Absaugung der Teile durch Unterdruck, vorzugsweise mittels einer Absaugvorrichtung.

Das Entfernen von Teilen der Schicht umfasst eine Erwärmung der Schicht und/oder des Manipulationsmittels. Die Erwärmung wird mittels Zuführung von Wärme zur zumindest teilweisen Verflüssigung der Teile der Schicht, insbesondere des Manipulationsmittels, durchgeführt. Die Wärmezuführung kann bevorzugt durch eine Heizung oder einen IR-Strahler erfolgen.

Vorzugsweise erfolgt eine gesteuerte und/oder geregelte Bewegung des Kontaktelementes. Dies kann beispielsweise die Positionierung des Kontaktelementes relativ zu der Schicht sein, oder auch eine Einstellung der Drehzahl bzw. der Umlaufgeschwindigkeit, der Tellerbürsten bzw. des Bürstenbandes.

Während das Kontaktelement Teile der Schicht entfernt, kann ein Zusetzen des Kontaktelements durch das entfernte Material der Schicht und/oder des Manipulationsmittels eintreten. Bei einer Bürste bedeutet dies, dass sich das entfernte Material in den Borsten festsetzt. Auch ein Schleif- und/oder ein Hobelelement kann unter Umständen von dem Zusetzen betroffen sein. Daher kann ein weiterer Schritt vorgesehen sein, in dem eine Reinigung des Kontaktelements durchgeführt wird. Das gesamte Verfahren zur Reinigung des Kontaktelements, das nachfolgend beschrieben wird, kann auch unabhängig von dem in dieser Anmeldung beschriebenen Verfahren betrieben werden.

Die Reinigung kann vorzugsweise durch mechanisches Abstreifen des Materials an einer Abstreifkante erfolgen, und/oder auch mittels Absaugung durch Unterdruck, beispielsweise durch die oben genannte oder eine weitere Absaugvorrichtung.

Um die Viskosität des Materials und/oder des Manipulationsmittels zu verringern und so die Lösbarkeit von dem Kontaktelement zu verbessern, kann auch hier eine Zuführung von Wärme an das Kontaktelement vorgesehen sein. Die Wärmezuführung kann bevorzugt durch eine Heizung oder einen IR-Strahler erfolgen. Die Heizung kann beispielsweise in dem Kontaktelement vorgesehen sein.

Alternativ oder zusätzlich kann die Reinigung des Kontaktelementes umfassen, dass das Kontaktelement während des Entfernens des Manipulationsmittels und/oder von Teilen der zuvor aufgetragenen Schicht mit Strahlung, insbesondere elektromagnetischer Strahlung und/oder Elektronenstrahlung, bestrahlt wird. Dadurch wird insbesondere erreicht, dass das Material und/oder das Manipulationsmittel, das sich an dem Kontaktelement festgesetzt hatte, mindestens teilweise oder vollständig ausgehärtet wird, und dann in einer harten und spröden Form vorliegt. Vorzugsweise wird durch die Aushärtung des Materials erreicht, dass sich dieses leicht von dem Kontaktelement, insbesondere von den Borsten falls eine Bürste vorgesehen ist, löst. Durch mechanisches Abstreifen und/oder Absaugen kann dieses Material wieder von dem Kontaktelement entfernt werden.

Zum mechanischen Abstreifen kann beispielsweise eine Abstreifkante vorgesehen sein, an der das zugesetzte Kontaktelement vorbeigeführt werden kann, wodurch das Manipulationsmittel und/oder der entfernte Teil der Schicht abgestreift werden können. Weist das Kontaktelement beispielsweise eine Bürste auf, so können hierzu die Borsten der Bürste mit der Abstreifkante in Kontakt treten.

Neben der Strahlungshärtung können auch weitere Härtungsmethoden eingesetzt werden, um das Material, das das Kontaktelement zugesetzt hat, auszuhärten. Allgemein können unterschiedliche Methoden eingesetzt werden, um insbesondere die Viskosität und/oder die Härte des Materials, das das Kontaktelement zusetzt, zu beeinflussen. Bei zyklisch arbeitenden Kontaktelementen ist es wichtig, dass das Entfernen von Teilen der Schicht sowie die Reinigung des Kontaktelements, also das Entfernen dieser Teile der Schicht von dem Kontaktelement, innerhalb eines Zyklus' ablaufen. Folglich muss auch die Beeinflussung der Viskosität, sofern sie im Verfahren durchgeführt wird, innerhalb dieses Zyklus' ablaufen. Da es sich bei dem Material, das das Kontaktelement zusetzt insbesondere um Material der Schicht und/oder des Manipulationsmittels handelt, kann daher grundsätzlich jedes Verfahren eingesetzt werden, das insbesondere ein Aushärten bzw. eine Änderung der Viskosität dieser Materialien bewirkt. Daher wird hierzu auf die in dieser Anmeldung beschriebenen Möglichkeiten verwiesen.

In einer bevorzugten Ausführungsform weist das Material und/oder das Manipulationsmittel einen Anteil von mehr als 70% von Acrylaten, die sich durch Bestrahlung mit elektromagnetischer Strahlung über die Bildung von chemischen Bindungen vernetzen, und so die Viskosität und damit auch die Klebrigkeit des Materials und/oder des Manipulationsmittels verringern, und die Sprödigkeit erhöhen. Daher ist die oben beschriebene Ausführungsform der Reinigung des Kontaktelements gut geeignet, um einen dauerhaften und wenig störanfälligen Betrieb einer nach dem erfindungsgemäßen Verfahren produzierenden industriellen Anlage zu gewährleisten.

In anderen Ausführungsformen kann das Material und/oder das Manipulationsmittel auch andere Bestandteile aufweisen oder daraus ausgebildet sein, wie beispielsweise eine wässrige Mischung mit Bindemitteln, Pigmenten und anderen Additiven.

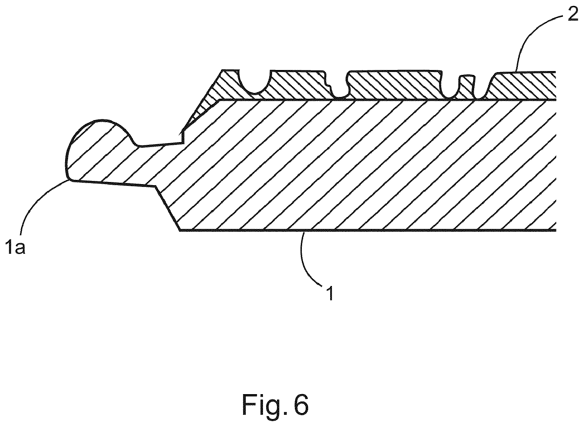

Vorzugsweise umfasst das Entfernen von Teilen der Schicht ein Beströmen der Oberfläche der Schicht und/oder des Manipulationsmittels mit einem Fluidstrom, insbesondere mit einem Luftstrom. Auf diese Weise kann insbesondere das Manipulationsmittel berührungslos entfernt werden, was vorteilhafterweise schonend für die Oberfläche der Schicht ist. So können auch Werkstücke verarbeitet werden, die Elemente aufweisen, die durch nicht berührungslose Verfahren, beispielsweise durch den Kontakt mit einer oben beschriebenen Bürste, beschädigt werden können. Zur Verdeutlichung ist in **Fig. 6** eine Ausführungsform eines solchen Werkstückes gezeigt. Hier ist ein Werkstück 1 in Form einer vorgefrästen Diele mit einer auf die Werkstückoberfläche aufgetragenen Schicht 2 gezeigt. Nach links weist das Werkstück 1 ein Verbindungselement 1a auf, das hier als Feder im Sinne einer Nut-Feder-Verbindung in eine Nut eines weiteren Werkstückes eingreifen kann, um so mehrere Werkstücke beispielsweise als Bodenbelag aneinanderzufügen. Nach dem Stand der Technik werden anstelle von Nut und Feder heute auch sogenannte "Klickprofile" für die Verlegung von Fußbodendielenverwendet, welche z.B. in der EP 2 280 130 A2 dargestellt sind. Diese Bereiche, bzw. auch der Übergangsbereich von dem Verbindungselement hin zu der Schicht 2, sollten möglichst nicht unnötig während der Fertigung mechanisch beansprucht werden. Daher ist hier ein berührungsloses Entfernen von Teilen der Schicht besonders vorteilhaft.

Des Weiteren kann das Verfahren vorzugsweise auch für Oberflächen außerhalb des Fußbodenbelages, z.B. für Möbel-, Wand-, Deckenoberflächen oder auch für Außenfassadenelemente oder weitere Anwendungen genutzt werden.

Vorzugsweise trifft der Fluidstrom entsprechend ausgeformt auf die Oberfläche der Schicht und/oder des Manipulationsmittels, so dass er sich über die gesamte Breite der Schicht erstreckt. Die Länge der Erstreckung der Auftrefffläche des Fluidstroms in Bewegungsrichtung des Werkstückes liegt vorzugsweise bei 1% bis 20%, besonders bevorzugt bei 5% bis 15%, insbesondere bei 10% bis 12%, der Länge der Erstreckung des Fluidstroms quer zur Bewegungsrichtung. Somit wird bevorzugt ein möglichst dünner Fluidstrom insbesondere im Sinne einer "Luftklinge" bzw. eines "Luftmessers" verwendet. Alternativ kann als Fluidstrom auch ein Flüssigkeitsstrom, insbesondere enthaltend Wasser, verwendet werden.

Vorzugsweise trifft der Fluidstrom unter einem Winkel auf die Schicht und/oder auf das Manipulationsmittels, der geringer als 45°, vorzugsweise geringer als 30°, besonders bevorzugt geringer als 15°, ist. Insbesondere bei lediglich auf die Oberfläche der Schicht aufgetragenem Manipulationsmittel ist eine flache Anströmung sinnvoll um eine Ablösung von der Schicht zu erreichen, sollte beispielsweise nur das Manipulationsmittel werden sollen. Je nach Situation kann jedoch auch eine steilere Anstellung des Fluidstroms sinnvoll sein, um beispielsweise Manipulationsmittel, das in Vertiefungen der Schicht enthalten ist, auszublasen. Bevorzugt wird der Winkel während der Durchführung des Verfahrens verändert, besonders bevorzugt periodisch verändert. Die Veränderung kann vorzugsweise auch in Abhängigkeit der aktuell erfassten Menge des entfernten Manipulationsmittels erfolgen. Diese Menge wird vorzugsweise durch eine Erfassungseinrichtung erfasst, die beispielsweise das Gewicht des Manipulationsmittels erfasst, das entfernt wurde.

Alternativ oder zusätzlich kann der Fluidstrom auch durch sogenannte Rotationsdüsen auf die Oberfläche der Schicht auftreffen. Dabei rotieren die Rotationsdüsen, welche den Fluidstrom auf die Oberfläche leiten, um eine mittlere Achse, bei einem gesamten Durchmesser der rotierenden Düsen von vorzugsweise 2-120 mm, besonders bevorzugt 5-50 mm. Dadurch wird ein zeitlich variabler Fluidstrom auf die Oberfläche gelenkt.

Bevorzugt enthält der Fluidstrom ferner Festkörper, die die Entfernung von Teilen der Schicht verbessern. Beispielsweise kann hier Sand oder eine vergleichbare Substanz enthalten sein, die zusätzlich neben dem Fluidstrom auf die Oberfläche der Schicht und/oder des Manipulationsmittels wirkt. Der Fluidstrom kann insbesondere dadurch auch dazu verwendet werden, um neben dem Manipulationsmittel auch Material der Schicht abzutragen.

Die Festkörper weisen vorzugsweise einen Durchmesser von 0,0001 bis 1 mm, bevorzugt 0,001 bis 0,5 mm, besonders bevorzugt 0,005 bis 0,3 mm auf.

Alternativ oder zusätzlich sind die Festkörper dazu ausgebildet, sich nach dem Auftreffen auf die Schicht und/oder auf das Manipulationsmittel zu verflüssigen oder zu verdampfen. Dies kann beispielsweise dadurch erreicht werden, dass die Festkörper die Eigenschaft aufweisen, bei der Umgebungstemperatur, der das Werkstück mit der Schicht ausgesetzt ist, zu verdampfen. Beispielsweise kann dies durch Festkörper aus Trockeneis erreicht werden. Diese können insbesondere durch einen Trockeneis-Strahler auf die Oberfläche der Schicht und/oder des Manipulationsmittels aufgebracht werden. So wird vorteilhafterweise erreicht, dass die Festkörper nicht auf und/oder in der Schicht zurückbleiben. Somit kann auf eine anschließende Entfernung der Festkörper von der Schicht verzichtet werden.

Alternativ oder zusätzlich kann vorgesehen sein, dass die Festkörper während der Erzeugung des Fluidstroms mit einer Flüssigkeit, insbesondere mit Wasser, beaufschlagt werden. Dadurch wird erreicht, dass eine Erhöhung der Masse der Festkörper erfolgt, so dass die Wirkung auf die Oberfläche der Schicht und/oder des Manipulationsmittels erhöht wird. Die Beaufschlagung kann beispielsweise dadurch erfolgen, dass die Festkörper mit dem Fluidstrom durch einen Nebel der Flüssigkeit bewegt werden. Dadurch wirken die Festkörper als Kondensationskeime an denen Bestandteile des Nebels anhaften, wodurch schließlich die Beaufschlagung des Festkörpers mit der Flüssigkeit erfolgt.

Die Festkörper können speziell Sandkörner, Trockeneis (festes CO2), Wassereis (gefrorenes Wasser), Natriumbicarbonat, oder Mischungen aus diesen genannten Festkörpern aufweisen.

Vorzugsweise weist das Verfahren ferner zumindest einen der folgenden Schritte auf:
- Aufbringen einer flüssigen Schicht zumindest auf einen Teil einer Oberfläche des Werkstückes und/oder auf ein auf die Oberfläche des Werkstückes aufgebrachtes Manipulationsmittel;
- Aushärten der Schicht und/oder des Manipulationsmittels zumindest bis zur teilweisen Aushärtung.

In einer speziellen Ausführungsform liegt ein Verfahren vor, das diesen Ablauf aufweist:
- Aufbringen einer flüssigen Schicht zumindest auf einen Teil einer Oberfläche des Werkstückes und/oder auf ein auf die Oberfläche des Werkstückes aufgebrachtes Manipulationsmittel;
- Aufbringen des Manipulationsmittels zumindest auf einen Teil der flüssigen Schicht und/oder in die flüssige Schicht und/oder zumindest auf einen Teil des Werkstückes;
- Aushärten der Schicht und/oder des Manipulationsmittels zumindest bis zur teilweisen Aushärtung;
- Entfernen des Manipulationsmittels, wie oben beschrieben.

Die Schicht und/oder das Manipulationsmittel sind vorzugsweise mittels elektromagnetischer Strahlung polymerisierbar ausgebildet.

In einer weiteren speziellen Ausführungsform liegt ein Verfahren vor, das folgenden Ablauf aufweist:
- Aufbringen einer flüssigen Schicht zumindest auf einen Teil einer Oberfläche des Werkstückes;
- Aufbringen des Manipulationsmittels zumindest auf einen Teil der flüssigen Schicht und/oder in die flüssige Schicht;
- Aushärten der Schicht und/oder des Manipulationsmittels zumindest bis zur teilweisen Aushärtung;
- Entfernen von Teilen der Schicht, wie oben beschrieben.

Bei dieser zuletzt genannten Ausführungsform kann das aufgebrachte Manipulationsmittel auch vollständig oder teilweise mit dem letzten Schritt (Entfernen von Teilen der Schicht) gemeinsam mit entfernt werden.

Bei jeder denkbaren Ausführungsform des Verfahrens, insbesondere bei den beiden eben beschriebenen speziellen Ausführungsformen, können weitere Verfahrensschritte vorgesehen sein, die sowohl vor, zwischen als auch nach den bisher beschriebenen Verfahrensschritten vorgesehen sein können. Zudem können auch einzelne Verfahrensschritte wiederholt werden.

Vorzugsweise weist das Manipulationsmittel Wasser auf. Das Manipulationsmittel besteht in einer speziellen Ausführungsform ausschließlich aus Wasser.

Bevorzugt weist die Schicht und/oder das Manipulationsmittel acrylathaltiges Material auf.

Das Werkstück wird vorzugsweise bei der Durchführung des Verfahrens in einer Bewegungsrichtung bewegt und so nacheinander Elementen einer Vorrichtung zugeführt, die zur Ausführung der einzelnen Verfahrensschritte ausgebildet sind. Alternativ oder zusätzlich kann auch vorgesehen sein, dass sich die Elemente der Vorrichtung im Verhältnis zu dem Werkstück bewegen.

Das Verfahren kann beispielsweise so durchgeführt werden, dass die Schicht in flüssiger Form auf die Oberfläche des Werkstückes aufgebracht wird. Anschließend wird das Manipulationsmittel auf und/oder in die Schicht aufgebracht. Das Verfahren kann jedoch auch so ausgebildet sein, dass zunächst das Manipulationsmittel auf die Oberfläche des Werkstückes aufgebracht wird. Anschließend erfolgt dann ein Aufbringen der Schicht. Das Manipulationsmittel fungiert hier vorzugsweise als Platzhalter, so dass Bereiche der Oberfläche des Werkstückes nicht mit der Schicht in Kontakt kommen. Wird das Manipulationsmittel entfernt, nachdem die Schicht ausgehärtet wurde, verbleiben diese Stellen als Vertiefungen bzw. Aussparungen in der Schicht. Natürlich sind auch Ausführungsformen denkbar, bei denen sowohl ein Aufbringen des Manipulationsmittels vor als auch nach dem Auftrag der Schicht erfolgt. Auch ist ein mehrmaliges Wiederholen des Aufbringens der Schicht und/oder des Manipulationsmittels möglich. Wird das Manipulationsmittel als Platzhalter eingesetzt, so wird das Manipulationsmittel bevorzugt vor Aufbringen der flüssigen Schicht ausgehärtet.

Vor dem Ausbringen des Manipulationsmittels kann eine Trocknung oder Aushärtung der flüssigen Schicht, vorzugsweise mit elektromagnetischer Strahlung mit einer Wellenlänge von 200 bis 400 nm, erfolgen, um insbesondere die Viskosität der flüssigen Schicht zu beeinflussen.

Vorzugsweise wird nach dem Aufbringen der flüssigen Schicht das Manipulationsmittel auf Teile der flüssigen Schicht aufgebracht.

Vorzugsweise werden, insbesondere zur Aushärtung, das Manipulationsmittel und die zumindest teilweise flüssige Schicht mit elektromagnetischer Strahlung, bevorzugt mit einer Wellenlänge von 180 bis 400 nm, bestrahlt.

Das Aushärten kann darüber hinaus ebenso mehrmals durchgeführt werden. Es kann beispielsweise ein erstes Aushärten der Schicht zumindest bis zur teilweisen Aushärtung durchgeführt werden, bevor das Manipulationsmittel aufgebracht wird. Auf diese Weise kann gezielt eine gewünschte Viskosität der Schicht eingestellt werden, so dass beispielsweise eine Struktur, die durch den Auftrag des Manipulationsmittels entsteht, für eine gewünschte Zeit Bestand hat, bevor die Struktur wieder zerläuft.

Vorzugsweise beinhaltet das Aushärten eine Bestrahlung der Schicht und/oder des Manipulationsmittels mit elektromagnetischer Strahlung, vorzugsweise mit UV-Strahlung, und/oder eine Bestrahlung mit Elektronenstrahlung.

Das Aushärten kann bevorzugt zeitgleich mit dem Entfernen von Teilen der Schicht erfolgen. Beispielsweise kann die Stelle der Schicht, die gerade mit dem Kontaktelement in Kontakt steht gleichzeitig mit UV-Strahlung bestrahlt werden, die die Aushärtung bewirkt. Gleiches gilt für alle mechanischen oder berührungslosen Entfernungsmöglichkeiten, wie oben beschrieben.

Das Manipulationsmittel, das Teile der Schicht abdeckt, kann bewirken, dass der abgedeckte Teil der Schicht bei der Aushärtung nicht in demselben Maße aushärtet wie freiliegende Teile. Dabei kann es sich insbesondere um die hier beschriebenen Methoden zur Aushärtung handeln. Nach dem Entfernen von Teilen der Schicht wird dann bevorzugt eine abschließende Härtung der verbleibenden Schicht und/oder des verbleibenden Manipulationsmittels durchgeführt.

Alternativ oder zusätzlich beinhaltet das Aushärten aktive und/oder passive Trocknung. Unter aktiver Trocknung wird im Weiteren jede Art von Trocknung verstanden, bei der die flüssige Schicht durch Schaffung von speziellen Bedingungen getrocknet wird. So kann die flüssige Schicht und/oder das Manipulationsmittel insbesondere mittels Anströmung mit einem Fluid, insbesondere mit Luft, und/oder durch Zuführung von Wärme, insbesondere mittels IR-Strahlung oder durch Verwendung einer Heizung, getrocknet werden. Passive Trocknung ist hingegen vorzugsweise dadurch gekennzeichnet, dass die flüssige Schicht und/oder das Manipulationsmittel alleine und ohne weitere Bearbeitung aushärtet. Dies kann beispielsweise durch Transport des Werkstücks auf einem freien Streckenabschnitt eines Bandtransports erfolgen, und/oder durch Ablegen des Werkstücks.

Vorzugsweise erfolgt das Aushärten mittels Reaktionsaushärtung durch beispielsweise ein Zwei-Komponentensystem, welches durch chemische Reaktion zwischen den Komponenten der Schicht und/oder des Manipulationsmittels innerhalb von weniger als 30 Minuten, bevorzugt weniger als 5 Minuten aushärtet.

Vorzugsweise wird die Schicht nach dem Aufbringen des Manipulationsmittels dergestalt ausgehärtet, dass sich die Viskosität der Stellen der Schicht an denen das Manipulationsmittel aufgebracht war von der Viskosität der Stellen an denen das Manipulationsmittel nicht aufgebracht war unterscheidet. Der Unterschied entspricht vorzugsweise mindestens einem Faktor 1,5, besonders bevorzugt mindestens einem Faktor 2. Vorzugsweise ist die Viskosität dabei an Stellen an denen das Manipulationsmittel aufgebracht war geringer als an Stellen an denen das Manipulationsmittel nicht aufgebracht war. Dies ist im Falle von Strahlungshärtung dadurch zu begründen, dass die Schicht unterhalb des Manipulationsmittels zumindest teilweise von der Strahlung abgeschirmt wurde, wodurch die Schicht hier einem geringeren Maß an Strahlung ausgesetzt war und somit weniger stark aushärtete.

Vorzugsweise wird das Aushärten der Schicht nach dem Entfernen von Teilen der Schicht bis zur Endhärtung der Schicht durchgeführt.

Vorzugsweise erfolgt das Aufbringen der flüssigen Schicht auf das Werkstück mit einem digitalen und/oder analogen Verfahren. Besonders bevorzugt erfolgt der Auftrag der flüssigen Schicht auf die gesamte Oberfläche des Werkstückes. Bei einem analogen Verfahren kann das Aufbringen mittels einer Auftragswalze oder einer Gießmaschine, die einen flüssigen Vorhang aus dem Material der Schicht erzeugt, durch den das Werkstück bewegt wird, erfolgen. Eine Auftragswalze und eine Gießmaschine haben den Vorteil, dass die Schicht mit relativ wenig Aufwand auf eine möglichst breite Fläche des Werkstückes aufgebracht werden kann. Bei einem digitalen Verfahren erfolgt das Aufbringen mittels digitaler Drucktechnik, beispielsweise mit einem Digitaldruckkopf oder Digitaldüsenbalken. Dadurch kann die Schicht auch nur auf Teilbereiche des Werkstückes aufgebracht werden.

Vorzugsweise erfolgt das Aufbringen des Manipulationsmittels auf das Werkstück und/oder auf die flüssige Schicht mit einem digitalen Verfahren. Dafür wird digitale Drucktechnik, beispielsweise mit einem Digitaldruckkopf oder Digitaldüsenbalken, eingesetzt. Dadurch kann das aufzubringende Manipulationsmittel besonders sparsam und präzise eingesetzt werden. Es ist jedoch auch analoge Technik, wie beispielsweise eine Gießvorrichtung denkbar.

Vorzugsweise umfasst das Aufbringen des Manipulationsmittels ein Aufbringen des Manipulationsmittels in Form von Tröpfchen und/oder in Form von feinen Tröpfchen. Das Aufbringen des Manipulationsmittels in Form von Tröpfchen auf die Schicht erfolgt vorzugsweise derart, dass die Tröpfchengeschwindigkeit und/oder das Tröpfchenvolumen so gesteuert werden, dass durch die Tröpfchen Vertiefungen in die Schicht eingebracht werden, wobei die Vertiefungen vorzugsweise eine Tiefe von vorzugsweise 2 µm bis 100 µm, besonders bevorzugt von 3 µm bis 50 µm, aufweisen.

Die Abgabe der feinen Tröpfchen wird vorzugsweise derart gesteuert, dass ihr Impuls beim Auftreffen auf die Oberfläche der flüssigen Schicht nicht ausreicht, um die Oberflächenspannung und/oder die Viskositätskräfte der flüssigen Schicht zumindest teilweise zu überwinden, so dass die feinen Tröpfchen vorzugsweise auf der Oberfläche der flüssigen Schicht zum Liegen kommen. Besonders bevorzugt wird das Manipulationsmittel in Form von feinen Tröpfchen als Nebel auf die Oberfläche der Schicht aufgebracht, so dass dieser insbesondere geschlossene Bereiche ausbildet, die die Oberfläche der Schicht bedecken.

Die feinen Tröpfchen weisen dabei insbesondere ein Volumen von 0,1 pl bis 1 pl, vorzugsweise von 0,3 pl bis 0,8 pl, besonders bevorzugt von 0,5 bis 0,6 pl auf.

Die Tröpfchen weisen dabei insbesondere ein Volumen von 1 pl bis 80 pl, vorzugsweise von 3 pl bis 12 pl, besonders bevorzugt von 5 pl bis 10 pl auf.

Die Geschwindigkeit der Tröpfchen und/oder der feinen Tröpfchen beträgt insbesondere zwischen 0,5 m/s und 12 m/s, vorzugsweise zwischen 3 m/s und 7 m/s, besonders bevorzugt zwischen 5 m/s und 6 m/s.

Während dem Aufbringen des Manipulationsmittels kann die Geschwindigkeit und/oder das Volumen der Tröpfchen und/oder der feinen Tröpfchen variiert werden.

Die Abgabe der Tröpfchen wird vorzugsweise derart gesteuert, dass ihr Impuls beim Auftreffen auf die Oberfläche der flüssigen Schicht ausreicht, um die Oberflächenspannung und/oder die Viskositätskräfte der flüssigen Schicht zumindest teilweise zu überwinden, so dass durch die Tröpfchen eine Verdrängung der flüssigen Schicht erfolgt, wodurch in der flüssigen Schicht Vertiefungen und insbesondere eine Struktur von 10 bis 50 µm Höhenunterschied eingebracht werden kann.

Vorzugsweise ist das Manipulationsmittel dazu ausgebildet, einfallende elektromagnetische Strahlung zumindest teilweise zu absorbieren, wobei vorzugsweise mindestens 10%, besonders bevorzugt mindestens 30%, insbesondere mindestens 50% der einfallenden elektromagnetischen Strahlung absorbiert werden. Auf diese Weise ist es möglich die Oberfläche der Schicht zumindest teilweise von elektromagnetischer Strahlung abzuschirmen, so dass, insbesondere beim Aushärten der flüssigen Schicht, die elektromagnetische Strahlung unterschiedlich stark auf die Oberfläche der Schicht wirkt. An den Stellen der Schicht, die mit dem Manipulationsmittel bedeckt sind, wirkt die elektromagnetische Strahlung schwächer im Vergleich zu freiliegenden Stellen. So kann, wenn beispielsweise eine Wellenlänge von kleiner 300 nm, vorzugsweise kleiner 250 nm, besonders bevorzugt kleiner 200 nm verwendet wird, eine Mikrofaltung an der Oberfläche der Schicht erzeugt werden, die an den Stellen der Schicht, die mit dem Manipulationsmittel bedeckt sind, schwächer ausfällt als an den freiliegenden Stellen. Im Ergebnis werden dann die Stellen die nicht bedeckt waren optisch matter erscheinen als die Stellen, die während dieser Bestrahlung mit dem Manipulationsmittel bedeckt waren. Speziell wird hier eine Wellenlänge von 185 nm verwendet. Die Bestrahlung findet bevorzugt in einer Schutzgasatmosphäre, insbesondere in einer N₂-Atmosphäre, statt.

Vorzugsweise sind das Manipulationsmittel und die Schicht dazu ausgebildet, sich während des Aushärtens nicht miteinander zu verbinden. Dadurch wird das insbesondere rückstandslose Entfernen des Manipulationsmittels deutlich erleichtert.

Vorzugsweise ist weiter eine Vorrichtung zur Durchführung der oben beschriebenen Verfahren vorgesehen, aufweisend:
- eine Transportvorrichtung, die dazu ausgebildet ist, ein Werkstück zu weiteren Elementen der Vorrichtung zu transportieren und/oder zumindest ein weiteres Element der Vorrichtung zu dem Werkstück zu bewegen;
- als weiteres Element eine Aufbringungsvorrichtung, insbesondere aufweisend eine digitale Druckvorrichtung, die dazu ausgebildet ist, ein Manipulationsmittel auf eine auf dem Werkstück befindliche, zumindest teilweise flüssige Schicht und/oder auf eine Oberfläche des Werkstückes aufzubringen;
- vorzugsweise als weiteres Element eine Aushärtvorrichtung, die dazu ausgebildet ist, die flüssige Schicht und/oder das Manipulationsmittel auszuhärten;
- als weiteres Element eine Entfernungsvorrichtung, die dazu ausgebildet ist, Teile der Schicht mechanisch und/oder fluidisch zu entfernen, wobei
die Vorrichtung ferner ein Steuermittel umfasst, das dazu ausgebildet ist, die Transportvorrichtung und die weiteren Elemente der Vorrichtung anzusteuern, um eines der Verfahren, wie oben beschrieben, durchzuführen.

Die Vorrichtung kann insbesondere Vorrichtungsmerkmale bzw. Ausbildungen aufweisen, die oben bei der Erläuterung des Verfahrens beschrieben wurden.

Vorzugsweise weist die Transportvorrichtung einen Bandtransport auf, auf dem das Werkstück zu den weiteren Elementen der Vorrichtung transportiert werden kann. Alternativ oder zusätzlich kann auch vorgesehen sein, dass zumindest eines der Elemente der Vorrichtung zu dem Werkstück bewegt wird.

Vorzugsweise weist die Aushärtvorrichtung eine Strahlenquelle für elektromagnetische Strahlung auf, wobei die Wellenlänge der abgegebenen Strahlung vorzugsweise veränderbar ist. Besonders bevorzugt ist die abgegebene Strahlung UV-Strahlung.

Vorzugsweise weist die Aushärtvorrichtung ein Gebläse auf, das dazu ausgebildet ist, einen Fluidstrom, insbesondere einen Luftstrom, auf die Schicht und/oder auf das Manipulationsmittel zu blasen, um eine Trocknung von Schicht und/oder Manipulationsmittel durchzuführen.

Vorzugsweise weist die Entfernungsvorrichtung zur mechanischen Entfernung ein Kontaktelement auf, das dazu ausgebildet ist, mit der Oberfläche der Schicht und/oder dem Manipulationsmittel in Kontakt zu treten, um Teile der Schicht zu entfernen.

Vorzugsweise weist die Entfernungsvorrichtung eine Düse auf, die dazu ausgebildet ist, einen Fluidstrom, vorzugsweise einen Luftstrom, auf die Oberfläche der Schicht strömen zu lassen, um das Teile der Schicht, insbesondere das Manipulationsmittel, zu entfernen. Der Fluidstrom ist bevorzugt wie oben beschrieben ausgebildet. Die Düse ist vorzugsweise beweglich ausgebildet, um den Winkel, unter dem der Fluidstrom auf die Oberfläche der Schicht trifft, variieren zu können.

Vorzugsweise weist die Entfernungsvorrichtung eine Absaugvorrichtung auf, die dazu ausgebildet ist, das Manipulationsmittel mittels Unterdruck von der Schicht abzusaugen und/oder bereits gelöste Teile der Schicht, insbesondere das Manipulationsmittel, aufzusaugen. Die Absaugvorrichtung weist vorzugsweise eine Absaugdüse auf, die besonders bevorzugt beweglich ausgebildet ist und an die Oberfläche der Schicht angenähert werden kann, um das Manipulationsmittel aufzusaugen.

Vorzugsweise weist die Vorrichtung eine Kammer auf, in der zumindest die Düse und/oder die Absaugdüse vorgesehen sind, um gelöste Teile des Manipulationsmittels aufzufangen.

Die Entfernungsvorrichtung weist eine Heizvorrichtung auf, die dazu ausgebildet ist, die Oberfläche der Schicht und/oder das Manipulationsmittel zu erwärmen. Die Heizvorrichtung kann dazu ausgebildet sein, Wärme an das Kontaktelement zu übertragen, um ein Zusetzen des Kontaktelements, wie oben beschrieben, zu verhindern bzw. zu reduzieren. Es kann auch vorgesehen sein, dass das Kontaktelement die Heizvorrichtung aufweist. Bevorzugt weist die Heizvorrichtung einen IR-Strahler auf.

Vorzugsweise weist das Kontaktelement eine stehende und/oder bewegte Bürste und/oder ein Schleif- und/oder ein Hobelelement auf. Vorzugsweise weist das Kontaktelement, insbesondere die Bürste, Textil- und/oder Kunststofffasern, insbesondere Nylonfasern, und/oder Metall, insbesondere Stahl, Messing oder Kupfer, auf. Im Übrigen kann das Kontaktelement wie oben beschrieben ausgebildet sein. Ferner kann das Kontaktelement auch Fasern, die ein Schleifmittel enthalten, aufweisen.

Nachfolgend wird die Erfindung anhand bevorzugter Ausführungsbeispiele und unter Zuhilfenahme der beigefügten Zeichnungen näher beschrieben. Es zeigen:
- Fig. 1: eine Ausführungsform der Erfindung, bei der das Entfernen von Teilen der Schicht fluidisch erfolgt;
- Fig. 2: eine Ausführungsform der Erfindung, bei der das Entfernen von Teilen der Schicht mechanisch erfolgt;
- Fig. 3: eine Ausführungsform von Bürsten zur mechanischen Entfernung von Teilen der Schicht;
- Fig. 4: eine weitere Ausführungsform von Bürsten zur mechanischen Entfernung von Teilen der Schicht;
- Fig. 5: eine weitere Ausführungsform von Bürsten zur mechanischen Entfernung von Teilen der Schicht;
- Fig. 6: ein Werkstück in Form einer vorgefrästen Diele mit einer aufgetragenen Schicht;
- Fig. 7: eine Möglichkeit, das Kontaktelement zu reinigen;
- Fig. 8: eine Vorrichtung in Form einer Produktionsstraße; und
- Fig. 9: einen exemplarisches Ablaufdiagramm des Verfahrens.

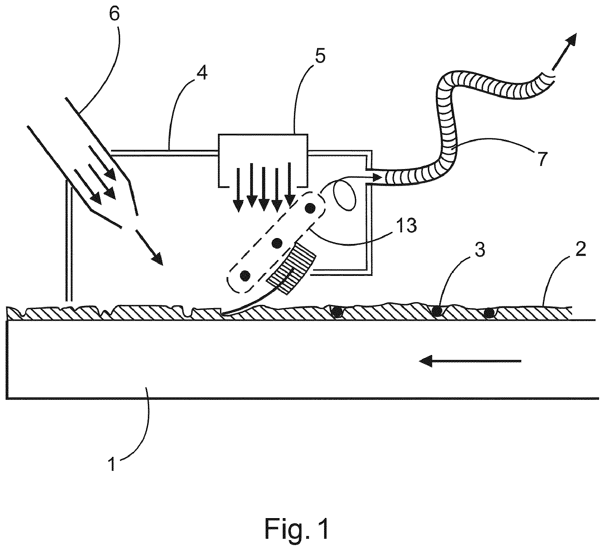

**Fig. 1** zeigt eine Ausführungsform der Erfindung, bei der das Entfernen von Teilen der Schicht, hier speziell des Manipulationsmittels, fluidisch erfolgt.

Es ist ein flächiges Werkstück 1 gezeigt, das in der Zeichnung von rechts nach links bewegt wird. Das Werkstück 1 ist mit einer flüssigen Schicht 2 beschichtet, die nach dem vollständigen Aushärten die Oberfläche des Werkstückes 1 bildet. In die flüssige Schicht 2 ist an einigen Stellen ein Manipulationsmittel 3 eingebracht worden, um die flüssige Schicht 2 zu verdrängen. Das Werkstück 1 wird beispielsweise durch eine Transportvorrichtung einer erfindungsgemäßen Vorrichtung in eine Kammer 4 bewegt. Die Kammer 4 weist in Bewegungsrichtung zunächst eine Aushärtvorrichtung 5 auf, die eine UV-Strahlenquelle umfasst, welche UV-Strahlung auf die flüssige Schicht 2 abgibt, um diese auszuhärten, so dass sich die Viskosität der Schicht 2 verändert. Die UV-Strahlung weist dabei eine Wellenlänge von 200 bis 400 nm auf. Anschließend wird das Werkstück 1 einer Düse 6 zugeführt, die gegen die Bewegungsrichtung des Werkstückes 1 einen Fluidstrom unter einem Winkel zu der Oberfläche der Schicht 2 abgibt. Der Winkel beträgt dabei maximal 45° oder weniger. Bevorzugt erfolgt eine Anpassung des Winkels zwischen 0° und 45°. Diese Anpassung kann beispielsweise in Abhängigkeit des entfernten Manipulationsmittels erfolgen.

Der Fluidstrom ist durch die Düse 6 so ausgebildet, dass er einen Strömungsdruck auf das Manipulationsmittel 3 ausübt, der so hoch ist, dass sich das Manipulationsmittel 3 als Teil 13 der Schicht 2 aus der Schicht 2 löst.

Durch den Druck des Fluidstroms werden anschließend die gelösten Teile 13 des Manipulationsmittels 3 (gestrichelt umrahmt) nach rechts getrieben, wo sie von einer Absaugvorrichtung 7 durch Unterdruck aufgefangen und aus der Kammer 4 entfernt werden.

Der Fluidstrom ist in einer Ausführungsform derart ausgebildet, dass er sich über die gesamte Breite des Werkstückes 1, d.h. in einer Erstreckungsrichtung des Werkstückes 1 senkrecht zur Zeichenebene erstreckt. Auf diese Weise ist sichergestellt, dass sämtliche Teile des Manipulationsmittels 3 von dem Fluidstrom erfasst werden, was insbesondere bei chaotisch bzw. unregelmäßig eingebrachtem Manipulationsmittel 3 das gezielte Anströmen einzelner Bereiche der Oberfläche der Schicht 2 überflüssig macht.

Als Fluid kommt hier eine Flüssigkeit oder ein gasförmiger Stoff zum Einsatz. Speziell kann als Fluid auch Wasser und/oder Luft eingesetzt werden.

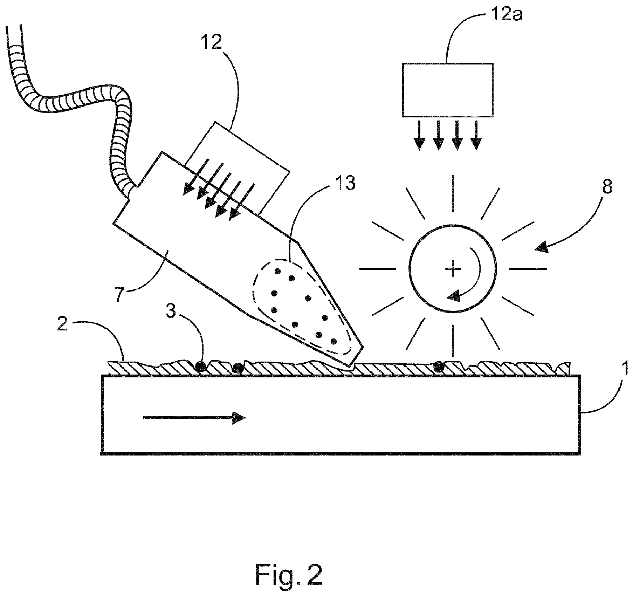

**Fig. 2** zeigt eine Ausführungsform der Erfindung, bei der das Entfernen von Teilen der Schicht mechanisch erfolgt.

Es ist ein flächiges Werkstück 1 gezeigt, das in der Zeichnung von links nach rechts bewegt wird. Das Werkstück 1 ist mit einer flüssigen Schicht 2 beschichtet, die nach dem vollständigen Aushärten die Oberfläche des Werkstückes 1 bildet. In die flüssige Schicht 2 ist an einigen Stellen ein Manipulationsmittel 3 eingebracht worden, um die flüssige Schicht 2 zu verdrängen. Das Werkstück 1 wird beispielsweise durch eine Transportvorrichtung einer erfindungsgemäßen Vorrichtung bewegt.

In Bewegungsrichtung ist zunächst eine Absaugvorrichtung 7 angeordnet, die dazu ausgebildet ist, mittels Unterdruck gelöste Teile 13 der Schicht 2, insbesondere das gelöste Manipulationsmittel 3, aufzusaugen. Dazu ist die Absaugdüse der Absaugvorrichtung 7 nahe der Oberfläche der Schicht 2 ausgerichtet. Der Absaugvorrichtung 7 nachgeordnet ist eine Bürste 8 angeordnet, die als Walzenbürste ausgebildet ist. Diese erstreckt sich senkrecht zur Zeichenebene quer zur Bewegungsrichtung des Werkstückes 1. Die Walzenbürste wird in dieser Ausführungsform gegenläufig zu der Bewegungsrichtung des Werkstückes 1 gedreht. Die Absaugvorrichtung 7 weist ferner eine Strahlenquelle 12 auf. Diese ist dazu ausgebildet, elektromagnetische Strahlung, wie UV-Strahlung, zur Aushärtung der aufgesaugten Teile 13 der Schicht 2, abzugeben, wodurch innerhalb der Absaugvorrichtung 7 eine Härtung der Teile 13 erfolgt, so dass diese nicht Gefahr laufen innerhalb der Absaugvorrichtung 7 anzuhaften und diese zuzusetzen.

Durch den Kontakt der Borsten der Bürste 8 werden Teile 13 der Schicht 2, insbesondere das Manipulationsmittel 3, aus der Schicht 2 ausgebürstet und in Richtung der Absaugvorrichtung 7 befördert. Diese nimmt die gelösten Teile 13 (gestrichelt umrahmt) auf.

Schließlich ist eine weitere Strahlenquelle 12a gezeigt, da dazu ausgebildet ist, elektromagnetische Strahlung, insbesondere UV-Strahlung, auf die Bürste 8 abzugeben, um dort anhaftendes Material von Teilen der Schicht 2 auszuhärten und/oder zu verspröden, um die Bürste 8 zu reinigen, wie oben beschrieben.

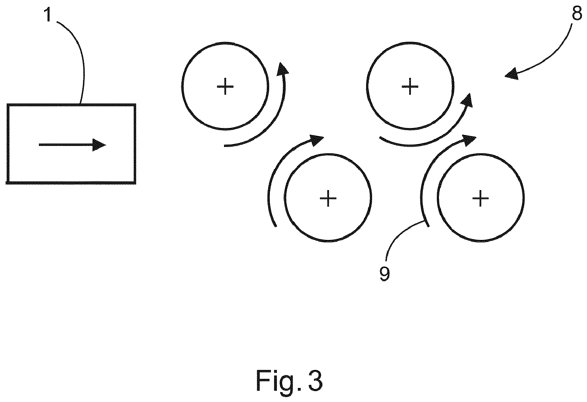

**Fig. 3** zeigt eine Ausführungsform von Bürsten zur mechanischen Entfernung von Teilen der Schicht.

Es sind ein Werkstück 1 sowie mehrere Bürsten 8 in der Draufsicht gezeigt. Das Werkstück 1 wird von links nach rechts unter den Bürsten 8 hindurchbewegt. Die Bürsten 8 sind hier als Tellerbürsten ausgebildet, die um eine jeweilige Achse in den gezeigten Rotationsrichtungen 9 rotieren. Wird das Werkstück 1 auf dem sich eine Schicht mit oder ohne einem Manipulationsmittel (beides nicht gezeigt) befindet, unter den Bürsten 8 hindurchbewegt, so werden Teile der Schicht, insbesondere das Manipulationsmittel, mechanisch durch Kontakt mit den sich relativ zu dem Werkstück 1 bewegenden Bürsten 8 entfernt.

Durch die Drehbewegung der Bürsten 8 wird zusätzlich zu der Relativbewegung zwischen Werkstück 1 und Bürsten 8 eine weitere Relativbewegungskomponente hinzugefügt, so dass sich die Kraft, mit der die Borsten der Bürsten 8 auf die Schicht bzw. auf das Manipulationsmittel einwirken, erhöht wird.

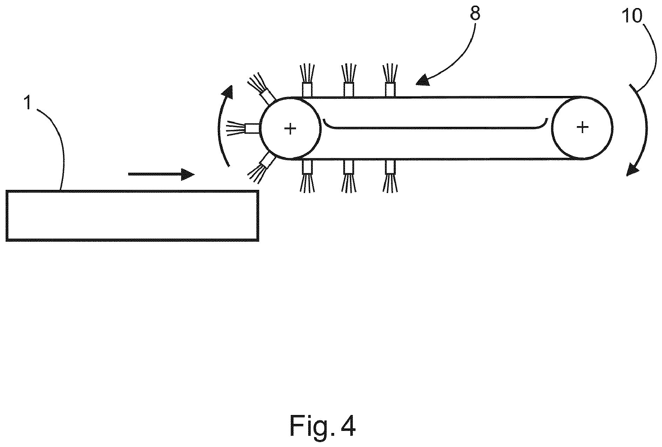

**Fig. 4** zeigt eine weitere Ausführungsform von Bürsten zur mechanischen Entfernung von Teilen der Schicht, insbesondere des Manipulationsmittels.

Es sind ein Werkstück 1 mit einer Schicht mit oder ohne einem Manipulationsmittel (beides nicht gezeigt) sowie ein Bürstenband in der Seitenansicht gezeigt. Das Werkstück 1 wird von links nach rechts bewegt. Das Bürstenband ist mit mehreren Bürsten 8 besetzt.

Das Bürstenband läuft in der gezeigten Umlaufrichtung 10 zyklisch um, so dass sich die Bürsten 8, die sich im Moment an der Unterseite des Bürstenbandes befinden, entgegen der Bewegung des Werkstückes 1 von rechts nach links bewegen. Auf diese Weise wird hier zusätzlich zu der Relativbewegung zwischen Werkstück 1 und Bürsten 8 aufgrund der Bewegung des Werkstückes 1 von links nach rechts eine weitere Relativbewegungskomponente hinzugefügt, so dass sich die Kraft, mit der die Borsten der Bürsten 8 auf die Schicht bzw. auf das Manipulationsmittel einwirken, erhöht wird.

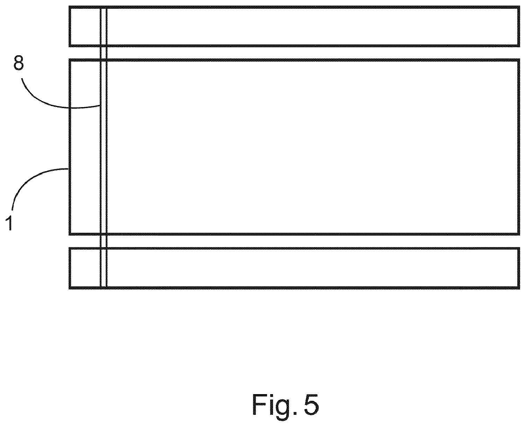

**Fig. 5** zeigt eine weitere Ausführungsform von Bürsten zur mechanischen Entfernung von Teilen der Schicht, insbesondere des Manipulationsmittels.

Es ist ein Werkstück 1 in der Draufsicht gezeigt, das von links nach rechts unter einem Balken 11 hindurchbewegt wird, der an seiner, dem Werkstück 1 zugewandten Seite Bürsten aufweist, die mit dem Werkstück 1 bzw. mit der Schicht und/oder dem Manipulationsmittel darauf (beides nicht gezeigt) in Kontakt treten können. Der Balken 11 erstreckt sich dabei zumindest über die gesamte Erstreckung des Werkstückes 1, in der Zeichnung also von oben nach unten.

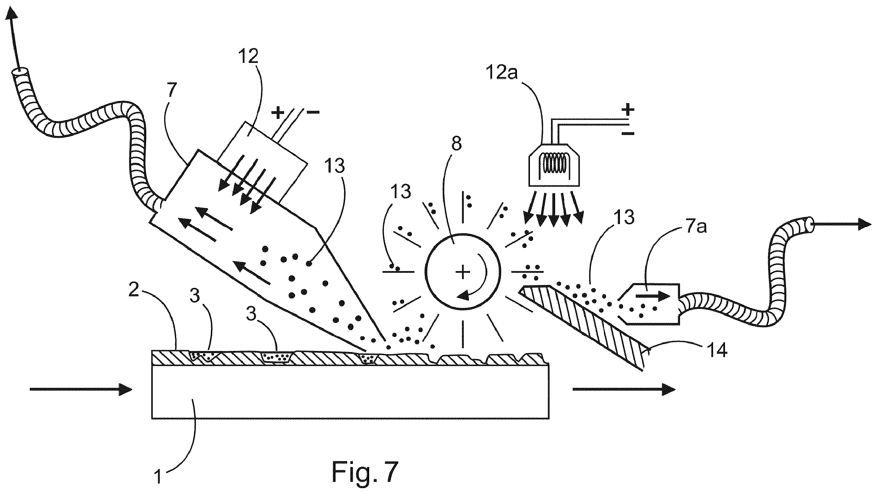

**Fig. 7** zeigt eine Möglichkeit, das Kontaktelement zu reinigen.

Es ist ein flächiges Werkstück 1 gezeigt, das in der Zeichnung von links nach rechts bewegt wird. Das Werkstück 1 ist mit einer flüssigen Schicht 2 beschichtet, die nach dem vollständigen Aushärten die Oberfläche des Werkstückes 1 bildet. In die flüssige Schicht 2 ist an einigen Stellen ein Manipulationsmittel 3 eingebracht worden, um die flüssige Schicht 2 zu verdrängen. Das Werkstück 1 wird beispielsweise durch eine Transportvorrichtung einer erfindungsgemäßen Vorrichtung bewegt.

In Bewegungsrichtung ist zunächst eine Absaugvorrichtung 7 angeordnet, die dazu ausgebildet ist, mittels Unterdruck gelöste Teile 13 der Schicht 2, insbesondere das gelöste Manipulationsmittel 3, aufzusaugen. Dazu ist die Absaugdüse der Absaugvorrichtung 7 nahe der Oberfläche der Schicht 2 ausgerichtet. Der Absaugvorrichtung 7 nachgeordnet ist eine Bürste 8 angeordnet, die als Walzenbürste ausgebildet ist. Diese erstreckt sich senkrecht zur Zeichenebene quer zur Bewegungsrichtung des Werkstückes 1. Die Walzenbürste wird in dieser Ausführungsform gegenläufig zu der Bewegungsrichtung des Werkstückes 1 gedreht. Die Absaugvorrichtung 7 weist ferner eine Strahlenquelle 12 auf. Diese ist dazu ausgebildet, elektromagnetische Strahlung, wie UV-Strahlung, zur Aushärtung der aufgesaugten Teile 13 der Schicht 2, abzugeben, wodurch innerhalb der Absaugvorrichtung 7 eine Härtung der Teile 13 erfolgt, so dass diese nicht Gefahr laufen innerhalb der Absaugvorrichtung 7 anzuhaften und diese zuzusetzen.

Die Funktionsweise der Bürste 8 sowie der Absaugvorrichtung 7 zur Entfernung von Teilen 13 der Schicht 2, insbesondere des Manipulationsmittels 3, ist im Übrigen mit der Funktionsweise der Ausführungsform in Fig. 2 identisch.

Zur Reinigung des Kontaktelementes bzw. der Bürste 8 ist hier eine Strahlenquelle 12a vorgesehen, die UV-Strahlung auf die Bürste 8 und somit auf die an den Borsten der Bürste 8 anhaftenden Teile 13 der Schicht 2, die Material der Schicht 2 sowie Material des Manipulationsmittels 3 aufweisen können, abstrahlt. In ihrer Rotationsbewegung treffen die Borsten der Bürste 8 nachdem sie von der Strahlenquelle 12a bestrahlt wurden auf eine Abstreifkante 14. Die Abstreifkante 14 erstreckt sich in der Zeichnung nach rechts unten und weist eine Oberfläche auf, die derart ausgeformt ist, dass Teile 13 der Schicht 2, die aus den Borsten gelöst wurden, in Richtung einer Absaugvorrichtung 7a gelenkt werden, die sich an dieser Oberfläche befindet. Die Absaugvorrichtung 7a ist dazu ausgebildet, die gelösten Teile 13 der Schicht 2 aufzunehmen und mittels Unterdruck abzusaugen.

Die Funktionsweise der Reinigung der Bürste 8 stellt sich somit wie folgt dar:
Innerhalb eines Zyklus, d.h. innerhalb einer Umdrehung der Bürste 8, treffen die Borsten der Bürste 8 zunächst auf die Oberfläche der Schicht 2 wodurch hier Teile 13 der Schicht 2 entfernt werden. Teile 13, die abgelöst werden und sich nicht in den Borsten der Bürste 8 festsetzen, werden durch die Bürste in Richtung der Absaugvorrichtung 7 befördert, die diese mittels Unterdruck aufsaugt. Teile 13, die sich in den Borsten der Bürste 8 festgesetzt haben, werden im weiteren Verlauf der Drehung der Bürste 8 von der Strahlenquelle 12a bestrahlt, wodurch diese aushärten. Die Bestrahlung der Strahlenquelle 12a kann auch derart stark sein, dass die Teile 13, die sich in den Borsten der Bürste 8 festgesetzt haben, verspröden. Anschließend treffen die Borsten auf die Abstreifkante 14, wodurch eine mechanische Einwirkung auf die Teile 13 erreicht wird. Aufgrund dessen lösen sich die gehärteten und/oder versprödeten Teile 13 aus den Borsten der Bürste 8, wobei sie bedingt durch ihre Ablösegeschwindigkeit und die geformte Oberfläche der Abstreifkante 14 zu der Absaugvorrichtung 7a befördert werden. Die Absaugvorrichtung 7a saugt diese Teile 13 schließlich auf. Die so gereinigten Borsten der Bürste 8 stehen nun in einem neuen Zyklus zur Entfernung von Teilen 13 der Schicht 2 wieder zur Verfügung.

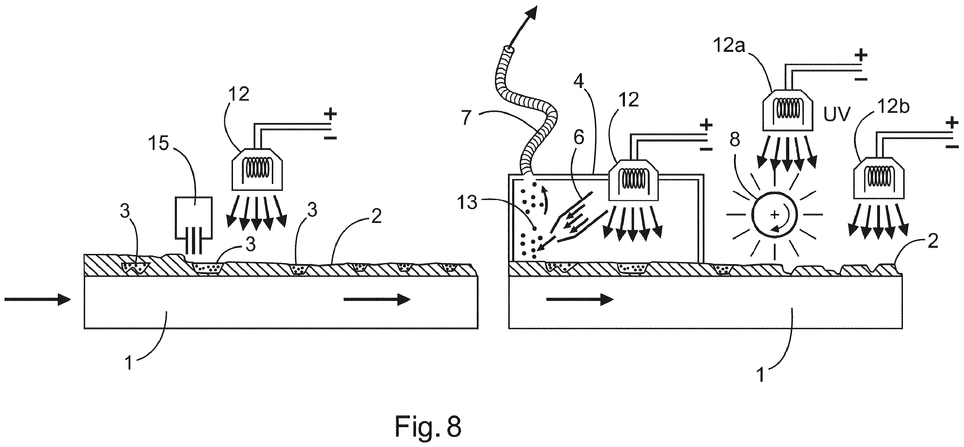

**Fig. 8** zeigt eine Vorrichtung in Form einer Produktionsstraße.

Es sind zwei Werkstücke 1 gezeigt, die nacheinander in Bewegungsrichtung von links nach rechts bewegt werden. Dazu ist eine Transportvorrichtung (nicht gezeigt) vorgesehen. Das Werkstück 1 weist auf seiner Oberfläche eine flüssige Schicht 2 auf. In und/oder auf der Schicht 2 ist ein Manipulationsmittel 3 enthalten. In Bewegungsrichtung sind nacheinander von links nach rechts folgende Elemente angeordnet. Zunächst ist ein stehendes Kontaktelement in Form einer Bürste 15 angeordnet, die dazu ausgebildet ist, um mit der Oberfläche der Schicht 2 in Kontakt zu treten, um Teile der Schicht 2 mechanisch zu entfernen. Dadurch wird hier insbesondere erreicht, dass in die Schicht 2 eingeschlossenes Manipulationsmittel 3 freigelegt wird. Der Bürste 15 nachgeordnet ist eine Strahlenquelle 12, die dazu ausgebildet ist, UV-Strahlung in Richtung des Werkstückes 1 bzw. der Schicht 2 abzugeben, um die Schicht 2 zumindest teilweise auszuhärten.

Anschließend ist in Bewegungsrichtung ein Element vorgesehen, das eine Kammer 4 aufweist, durch die das Werkstück 1 bewegt wird. Die Kammer 4 weist in Bewegungsrichtung zunächst eine Düse 6 auf, die gegen die Bewegungsrichtung des Werkstückes 1 einen Fluidstrom unter einem Winkel zu der Oberfläche der Schicht 2 abgibt. Der Winkel beträgt dabei maximal 90° oder weniger. Bevorzugt erfolgt eine Anpassung des Winkels zwischen 0° und 30°. Diese Anpassung kann beispielsweise in Abhängigkeit des entfernten Materials des Manipulationsmittels und/oder in Abhängigkeit des entfernten Materials der Schicht 2 erfolgen. Der Fluidstrom weist Festkörper auf, wie sie oben beschrieben wurden, um Teile 13 der Schicht 2 zu entfernen. Die Kammer weist ferner eine Absaugvorrichtung 7 auf, die dazu ausgebildet ist, gelöste Teile 13 der Schicht 2 aufzusaugen. Innerhalb der Kammer befindet sich in Bewegungsrichtung hinter der Düse 6 eine Strahlenquelle 12, die dazu ausgebildet ist, die Schicht 2 mit Strahlung zu bestrahlen, um diese teilweise auszuhärten, so dass sich die Viskosität der Schicht 2 verändert. Die Strahlung kann beispielsweise UV-Strahlung mit einer Wellenlänge von 200 bis 400 nm sein.

Der Fluidstrom ist in einer Ausführungsform derart ausgebildet, dass er sich über die gesamte Breite des Werkstückes 1, d.h. in einer Erstreckungsrichtung des Werkstückes 1 senkrecht zur Zeichenebene erstreckt. Auf diese Weise ist sichergestellt, dass sämtliche Bereiche der Schicht 2 von dem Fluidstrom erfasst werden.

Als Fluid kommt hier eine Flüssigkeit oder ein gasförmiger Stoff zum Einsatz. Speziell kann als Fluid auch Wasser und/oder Luft eingesetzt werden.

Der Kammer 4 nachgelagert ist ein Kontaktelement mit einer Bürste 8 in Form einer Walzenbürste angeordnet. Die Bürste 8 ist dazu ausgebildet Teile der Schicht 2 mechanisch zu entfernen. Um zur Reinigung der Bürste 8 Material der Teile der Schicht 2, das an den Borsten anhaftet auszuhärten, um es beispielsweise an einer Abstreifkante (nicht gezeigt) aus den Borsten zu entfernen, ist oberhalb der Bürste eine Strahlenquelle 12a angeordnet, die beispielsweise UV-Strahlung auf die Bürste 8 abgibt.

Die Reinigung der Bürste 8 kann im Wesentlichen entsprechend der Beschreibung zu Fig. 7 erfolgen.

Der Bürste 8 in Bewegungsrichtung nachgelagert ist eine weitere Strahlenquelle 12b angeordnet. Diese gibt beispielsweise UV-Strahlung auf die Schicht 2 und möglicherweise gewünscht enthaltenes Manipulationsmittel 3 ab, um eine Endhärtung durchzuführen.

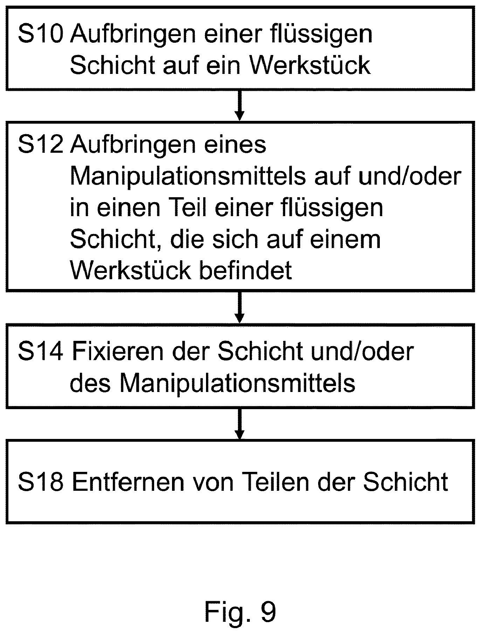

**Fig. 9** zeigt ein exemplarisches Ablaufdiagramm des Verfahrens.

In Schritt S10 wird eine flüssige Schicht auf ein Werkstück aufgebracht, die dann in ausgehärtetem Zustand die Oberfläche des Werkstückes bildet. Dies kann beispielsweise mit einem digitalen oder analogen Verfahren erfolgen.

In Schritt S12 erfolgt ein Aufbringen eines Manipulationsmittels auf und/oder in einen Teil der flüssigen Schicht, die sich auf einem Werkstück befindet. Wird Schritt S12 vor Schritt S10 ausgeführt, so kann auch Manipulationsmittel auf das Werkstück aufgetragen werden, wobei nachfolgend Schritt S10 durchgeführt wird, so dass das Manipulationsmittel von der flüssigen Schicht eingeschlossen wird.

In Schritt S14 erfolgt das Fixieren der Schicht mit dem Manipulationsmittel auf dem Werkstück. Alternativ kann auch nur die Schicht fixiert werden.

In Schritt S18 werden Teile der Schicht, dazu kann auch Material das Manipulationsmittels gehören, entfernt. Dies erfolgt wie oben beschrieben.

Das Verfahren kann durch Vertauschen, Weglassen und/oder Wiederholen einzelner Schritte sowie durch Ergänzen weiterer Schritte weitergebildet werden.

Die Erfindung ist nicht auf die hier gezeigten Ausführungsformen beschränkt. Vielmehr können weitere Vorrichtungen und/oder Verfahren erhalten werden, die ebenfalls der Erfindung entsprechen, indem einzelne Merkmale miteinander kombiniert, ausgetauscht oder weggelassen werden.

Beispielsweise kann die Konfiguration aus Fig. 7 in die Produktionsstraße aus Fig. 8 ergänzend integriert sein, oder anstelle der Kammer 4 und/oder der hier gezeigten Bürste 8 vorgesehen sein.

Auch wenn in den Figuren 2, 7 und 8 Bürsten 8 in Form von Walzenbürsten vorgesehen sind, können ergänzend oder alternativ auch die Ausführungen der Bürsten 8 aus den Figuren 3, 4 und 5 vorgesehen sein.

Sämtliche Düsen 6, die in den Figuren 1 und 8 gezeigt sind, können dazu ausgebildet sein, einen Fluidstrom mit oder ohne Festkörper, wie sie oben beschrieben wurden, abzugeben. Der Fluidstrom kann ein Gas und/oder eine Flüssigkeit enthalten, wobei er speziell Luft und/oder Wasser enthält.

Die in sämtlichen Figuren gezeigten Strahlenquellen können dazu ausgebildet sein, alternativ oder zusätzlich zu elektromagnetischer Strahlung, insbesondere UV-Strahlung, auch andere Strahlung, wie z.B. Elektronenstrahlung, abzugeben. Die Strahlungsart und/oder die entsprechende Wellenlänge werden dabei abhängig von der Materialzusammensetzung der Schicht 2 und/oder des Manipulationsmittels 3 und/oder abhängig von der gewünschten Wirkung der Strahlung auf Schicht 2 und/oder Manipulationsmittel 3 gewählt. So kann zur vollständigen Aushärtung eine andere Wellenlänge und/oder Strahlung eingesetzt werden als wenn in einem vorgelagerten Schritt lediglich die Viskosität der Schicht 2 verändert werden soll, um beispielsweise ein Verlaufen der durch das Manipulationsmittel 3 eingebrachten Vertiefungen zu verhindern.

Sämtliche der hier gezeigten Ausführungsformen der Erfindung, die mindestens eine Bürste 8 aufweisen, können ferner dahingehend ausgebildet sein, dass die mindestens eine Bürste 8 beweglich vorgesehen ist. Darunter ist zu verstehen, dass die mindestens eine Bürste 8 aktiv durch ein vorgegebenes Bewegungsmuster bewegt werden kann. So kann beispielsweise eine Tellerbürste an einer schwenkbaren Aufhängung vorgesehen sein.

### Bezugszeichenliste

- 1: Werkstück
- 1a: Verbindungselement
- 2: Schicht
- 3: Manipulationsmittel
- 4: Kammer
- 5: Aushärtvorrichtung
- 6: Düse
- 7: Absaugvorrichtung
- 7a: Absaugvorrichtung
- 8: Bürste
- 9: Rotationsrichtung
- 10: Umlaufrichtung
- 11: Balken
- 12: Strahlenquelle
- 12a: Strahlenquelle
- 12b: Strahlenquelle
- 13: gelöste Teile der Schicht 2
- 14: Abstreifkante
- 15: Kontaktelement
- S10: Aufbringen einer flüssigen Schicht
- S12: Aufbringen eines Manipulationsmittels
- S14: Fixieren der Schicht
- S18: Entfernen von Teilen der Schicht

## Patentansprüche

1. Verfahren zum Herstellen einer dekorativen Oberfläche auf einem Werkstück (1), mit den Schritten:
- Aufbringen (S10) einer flüssigen Schicht (2) zumindest auf einen Teil einer Oberfläche des Werkstückes (1);
- Aufbringen (S12) eines Manipulationsmittels (3) zumindest auf und/oder in einen Teil der flüssigen Schicht (2), die sich auf dem Werkstück (1) befindet;
- Aushärten (S14) der Schicht (2) und des Manipulationsmittels (3) zumindest bis zur teilweisen Aushärtung;
- Entfernen (S18) von Teilen (13) der Schicht (2), wobei
das Entfernen (S18) mechanisch und/oder berührungslos, insbesondere fluidisch, erfolgt,
**dadurch gekennzeichnet, dass**
das Entfernen (S18) eine Erwärmung der Schicht (2) und/oder des Manipulationsmittels (3) umfasst,
wobei die Erwärmung der Schicht (2) und/oder des Manipulationsmittels (3) mittels Zuführung von Wärme, zur zumindest teilweisen Verflüssigung der Teile (13) durchgeführt wird.

2. Verfahren nach Anspruch 1, wobei
die Teile (13) der Schicht (2) auch Teile des auf oder in der Schicht (2) befindlichen Manipulationsmittels (3) umfassen oder ausschließlich aus dem Manipulationsmittel (3) bestehen.

3. Verfahren nach Anspruch 1 oder 2, wobei
das Entfernen (S18) mechanisch mittels einer Entfernungsvorrichtung erfolgt, die ein Kontaktelement aufweist, das mit der Oberfläche der Schicht (2) in Kontakt steht, wobei sich die Oberfläche der Schicht (2) und das Kontaktelement beim Entfernen (S18) relativ zueinander bewegen.

4. Verfahren nach Anspruch 3, wobei
das Kontaktelement eine stehende und/oder bewegte Bürste (8) und/oder ein Schleif- und/oder ein Hobelelement aufweist, wobei vorzugsweise die Bürste (8) zumindest als bewegte Bürste (8) eine Tellerbürste und/oder eine Walzenbürste und/oder ein Bürstenband und/oder als stehende Bürste (8) einen Balken (11) mit Bürstenbesatz aufweist, und/oder wobei
das Kontaktelement, insbesondere die Bürste (8), Textil- und/oder Kunststofffasern, insbesondere Nylonfasern, Anderlon, und/oder Metall, insbesondere Stahl, Messing oder Kupfer, als Borsten aufweist.

5. Verfahren nach einem der vorangegangenen Ansprüche, wobei
das Entfernen (S18) eine Absaugung der Teile (13) durch Unterdruck, vorzugsweise mittels einer Absaugvorrichtung umfasst, und/oder wobei die Erwärmung der Schicht (2) und/oder des Manipulationsmittels (3) mittels Zuführung von Wärme, zur zumindest teilweisen Verflüssigung des Manipulationsmittels (3), durchgeführt wird.

6. Verfahren nach einem der Ansprüche 3 oder 4, wobei
ein Reinigungsschritt des Kontaktelements durchgeführt wird.

7. Verfahren nach einem der vorangegangenen Ansprüche, wobei
das Entfernen (S18) ein Beströmen der Oberfläche der Schicht (2) und/oder des Manipulationsmittels (3) mit einem Fluidstrom, insbesondere mit einem Luftstrom, umfasst.

8. Verfahren nach Anspruch 7, wobei
der Fluidstrom entsprechend ausgeformt auf die Oberfläche der Schicht (2) und/oder des Manipulationsmittels (3) trifft, so dass er sich über die gesamte Breite der Schicht (2) erstreckt, und/oder wobei
der Fluidstrom unter einem Winkel auf die Schicht (2) und/oder auf das Manipulationsmittels (3) trifft, der geringer als 45°, vorzugsweise geringer als 30°, besonders bevorzugt geringer als 15°, ist.

9. Verfahren nach Anspruch 7 oder 8, wobei
der Fluidstrom Festkörper aufweist, die einen Durchmesser von 0,0001 bis 1 mm, bevorzugt 0,001 bis 0,5 mm, besonders bevorzugt 0,005 bis 0,3 mm aufweisen, und/oder die dazu ausgebildet sind, sich nach dem Auftreffen auf die Schicht (2) zu verflüssigen oder zu verdampfen, und/oder die bei der Abgabe mit einer Flüssigkeit beaufschlagt werden.

10. Verfahren nach einem der vorangegangenen Ansprüche, wobei
die Schicht (2) vor dem Aufbringen (S12) des Manipulationsmittels (3) zumindest teilweise ausgehärtet wird, wobei dazu vorzugsweise elektromagnetische Strahlung, insbesondere UV-Strahlung, verwendet wird.

11. Verfahren nach einem der vorangegangenen Ansprüche, wobei
das Aushärten (S14) eine Bestrahlung der Schicht (2) und/oder des Manipulationsmittels (3) mit elektromagnetischer Strahlung, vorzugsweise mit UV-Strahlung, und/oder eine Bestrahlung mit Elektronenstrahlung beinhaltet, und/oder wobei
das Aushärten (S14) aktive und/oder passive Trocknung und/oder Reaktionsaushärtung, vorzugsweise durch ein Zwei-Komponentensystem, beinhaltet, und/oder wobei
das Aushärten (S14) nach dem Entfernen (S18) bis zur Endhärtung der Schicht (2) durchgeführt wird.

12. Verfahren nach einem der vorangegangenen Ansprüche, wobei
das Manipulationsmittel (3) und die Schicht (2) dazu ausgebildet sind, dass sie sich während des Aushärtens (S14) nicht miteinander verbinden.

13. Vorrichtung zur Durchführung der Verfahren nach einem der Ansprüche 1 bis 12, aufweisend:
- eine Transportvorrichtung, die dazu ausgebildet ist, ein Werkstück (1) zu weiteren Elementen der Vorrichtung zu transportieren, und/oder zumindest ein weiteres Element der Vorrichtung zu dem Werkstück (1) zu bewegen;
- als weiteres Element eine Aufbringungsvorrichtung (15), insbesondere aufweisend eine digitale Druckvorrichtung, die dazu ausgebildet ist, ein Manipulationsmittel (3) auf eine auf dem Werkstück (1) befindliche, zumindest teilweise flüssige Schicht (2) aufzubringen;
- als weiteres Element eine Aushärtvorrichtung, die dazu ausgebildet ist, die flüssige Schicht (2) und das Manipulationsmittel (3) auszuhärten;
- als weiteres Element eine Entfernungsvorrichtung, die dazu ausgebildet ist, Teile (13) von der Schicht (2) mechanisch und/oder fluidisch zu entfernen,
**dadurch gekennzeichnet, dass**
die Vorrichtung ferner ein Steuermittel umfasst, das dazu ausgebildet ist, die Transportvorrichtung und die weiteren Elemente der Vorrichtung anzusteuern, um das Verfahren nach einem der Ansprüche 1 bis 12 durchzuführen, und dass
die Entfernungsvorrichtung eine Heizvorrichtung aufweist, die dazu ausgebildet ist, die Oberfläche der Schicht (2) und/oder das Manipulationsmittel (3) zu erwärmen, um eine Verflüssigung der Teile der Schicht (13) zu erzielen.

14. Vorrichtung nach Anspruch 13, wobei
die Transportvorrichtung einen Bandtransport aufweist, und/oder wobei
die Aushärtvorrichtung eine Strahlenquelle (12), vorzugsweise für elektromagnetische Strahlung, aufweist, wobei die Wellenlänge der abgegebenen Strahlung vorzugsweise veränderbar ist, und/oder wobei
die Aushärtvorrichtung ein Gebläse aufweist, das dazu ausgebildet ist, einen Fluidstrom, insbesondere einen Luftstrom, auf die Schicht (2) und/oder das Manipulationsmittel (3) zu blasen; und/oder wobei
die Entfernungsvorrichtung zur mechanischen Entfernung ein Kontaktelement aufweist, das dazu ausgebildet ist, mit der Oberfläche der Schicht (2) in Kontakt zu treten, um Teile (13) der Schicht (2) zu entfernen; und/oder wobei
die Entfernungsvorrichtung eine Düse (6) aufweist, die dazu ausgebildet ist, einen Fluidstrom, vorzugsweise einen Luftstrom, auf die Oberfläche der Schicht (2) strömen zu lassen, um das Manipulationsmittel (3) zu entfernen, wobei der Fluidstrom bevorzugt Festkörper aufweist, die einen Durchmesser von 0,0001 bis 1 mm, bevorzugt 0,001 bis 0,5 mm, besonders bevorzugt 0,005 bis 0,3 mm, aufweisen; und/oder wobei
die Entfernungsvorrichtung eine Absaugvorrichtung (7) aufweist, die dazu ausgebildet ist, das Manipulationsmittel (3) mittels Unterdruck von der Schicht (2) abzusaugen und/oder bereits gelöstes Manipulationsmittel (3) aufzusaugen.

15. Vorrichtung nach Anspruch 14, wobei
das Kontaktelement eine stehende und/oder bewegte Bürste (8) und/oder ein Schleif- und/oder ein Hobelelement aufweist, und/oder wobei
das Kontaktelement, insbesondere die Bürste (8), Textil- und/oder Kunststofffasern, insbesondere Nylonfasern, und/oder Anderlon und/oder Metall, insbesondere Stahl, Messing oder Kupfer, als Borsten aufweist.

## Claims

1. Method for producing a decorative surface on a workpiece (1), the method comprising the steps:
- applying (S10) a liquid layer (2) onto at least a part of a surface of the workpiece (1);
- applying (S12) a manipulation medium (3) at least onto and/or into a part of the liquid layer (2) located on the workpiece (1);
- curing (S14) the layer (2) and the manipulation medium (3) at least until the partial curing,
- removal (S18) of parts (13) of the layer (2), wherein
the removal (S18) takes place in a mechanical and/or contactless manner, in particular in a fluidic manner,
**characterized in that**
the removal (S18) includes a heating of the layer (2) and/or the manipulation medium (3), wherein
the heating of the layer (2) and/or the manipulation medium (3) is executed by supplying heat for at least partial liquefaction of the parts (13).

2. Method according to claim 1, wherein
the parts (13) of the layer (2) also include parts of the manipulation medium (3) located on or in the layer (2) or exclusively consist of the manipulation medium (3).

3. Method according to claim 1 or 2, wherein
the removal (S18) takes place mechanically by means of a removal device comprising a contact element being in contact with the surface of the layer (2), wherein the surface of the layer (2) and the contact element move relative to each other during the removal (S18).

4. Method according to claim 3, wherein
the contact element comprises a stationary and/or movable brush (8) and/or a grinding element and/or a plane element, wherein, preferably, the brush (8) comprises, at least as the movable brush (8), a disc brush and/or a roller brush and/or a brush band and/or, as the stationary brush (8), a beam (11) with a brush trimming, and/or wherein
the contact element, particularly the brush (8), comprises textile and/or plastic fibers, in particular, nylon fibers, Anderlon, and/or metal, particularly steel, brass or copper, as bristles.

5. Method according to anyone of the preceding claims, wherein
the removal (S18) includes a suction of the parts (13) by vacuum, preferably by means of a suction device, and/or the heating of the layer (2) and/or the manipulation medium (3) by supplying heat for at least partial liquefaction of the manipulation medium (3).

6. Method according to anyone of the claims 3 or 4, wherein
a step of cleaning the contact element is executed.

7. Method according to anyone of the preceding claims, wherein
the removal (S18) includes a streaming to the surface of the layer (2) and/or to the manipulation medium (3) by a fluid flow, in particular an air flow.

8. Method according to claim 7, wherein
the accordingly formed fluid flow impinges onto the surface of the layer (2) and/or the manipulation medium (3) so that the fluid flow extends across the entire width of the layer (2), and/or wherein
the fluid flow impinges onto the layer (2) and/or onto the manipulation medium (3) at an angle which is less than 45°, preferably less than 30°, especially preferred less than 15°.

9. Method according to claim 7 or 8, wherein
the fluid flow comprises solid bodies having a diameter of 0.0001 to 1 mm, preferably 0.001 to 0.5 mm, especially preferred 0.005 to 0.3 mm and/or which are configured to liquefy or to evaporate after the impinging onto the layer (2) and/or which are supplied by a liquid when emitted.

10. Method according to anyone of the preceding claims, wherein
the layer (2) is at least partially cured before the applying (S12) of the manipulation medium (3), wherein, thereto, a preferably electromagnetic radiation, in particular, UV radiation, is used.

11. Method according to anyone of the preceding claims, wherein
the curing (S14) includes an irradiation of the layer (2) and/or of the manipulation medium (3) by electromagnetic radiation, preferably by UV radiation, and/or an irradiation by electron radiation, and/or wherein
the curing (S14) includes active and/or passive drying and/or reaction curing, preferably by a two-component system, and/or wherein
the curing (S14) is performed after the removal (S18) until to the final curing of the layer (2).

12. Method according to anyone of the preceding claims, wherein
the manipulation medium (3) and the layer (2) are configured such that they do not coalesce with each other during the curing (S14).

13. Device for performing the method according to anyone of the claims 1 to 12, comprising:
- a transport device configured to transport a workpiece (1) to further elements of the device and/or to move at least one further element of the device to the workpiece (1);
- as further element, an application device (15), in particular, comprising a digital printing device configured to apply a manipulation medium (3) onto an at least partial liquid layer (2) located on the workpiece (1);
- as further element, a curing device configured to cure the liquid layer (2) and the manipulation medium (3);
- as further element, a removal device configured to remove parts (13) of the layer (2) in a mechanical and/or fluidic manner,
**characterized in that**
the device further comprises a control means configured to control the transport device and the further elements of the device in order to execute the method according to anyone of the claims 1 to 12, and
the removal device comprises a heating device configured to heat the surface of the layer (2) and/or the manipulation medium (3) to achieve a liquefaction of the parts of the layer (13).

14. Device according to claim 13, wherein
the transport device comprises a belt transport, and/or wherein
the curing device comprises a radiation source (12), preferably for an electromagnetic radiation, wherein the wavelength of the emitted radiation is preferably variable, and/or wherein
the curing device comprises a blower configured to blow a fluid flow, particularly an airflow, onto the layer (2) and/or the manipulation medium (3); and/or wherein
the removal device for the mechanical removal comprises a contact element configured to come into contact with the surface of the layer (2) in order to remove parts (13) of the layer (2); and/or wherein
the removal device comprises a nozzle (6) configured to let flow a fluid flow, preferably an airflow, onto the surface of the layer (2) in order to remove the manipulation medium (3), wherein the fluid flow preferably comprises solid bodies having a diameter of 0.0001 to 1 millimeter, preferably 0.001 to 0.5 mm, especially preferred 0.005 to 0.3 mm; and/or wherein
the removal device comprises a suction device (7) configured to suck the manipulation medium (3) from the layer (2) by means of vacuum and/or to suck up the already loosed manipulation medium (3).

15. Device according to claim 14, wherein
the contact element comprises a stationary and/or a moved brush (8) and/or a grinding element and/or a plane element, and/or wherein
the contact element, particularly the brush (8), comprises textile and/or plastic fibers, in particular, nylon fibers, and/or Andalon, and/or metal, in particular, steel, brass or copper, as bristles.

## Revendications

1. Procédé de fabrication d'une surface décorative sur une pièce à fabriquer (1), comprenant les étapes suivantes :
- appliquer (S10) une couche liquide (2) au moins sur une partie d'une surface de la pièce à fabriquer (1) ;
- appliquer (S12) un moyen de manipulation (3) au moins sur et/ou dans une partie de la couche liquide (2) qui se trouve sur la pièce à fabriquer (1) ;
- durcir (S14) la couche (2) et le moyen de manipulation (3) au moins jusqu'au durcissement partiel ;
- enlever (S18) des parties (13) de la couche (2), dans lequel
l'enlèvement (S18) est effectué mécaniquement et/ou sans contact, en particulier de manière fluidique,
**caractérisé en ce que**
l'enlèvement (S18) comprend un chauffage de la couche (2) et/ou du moyen de manipulation (3),
dans lequel le chauffage de la couche (2) et/ou du moyen de manipulation (3) est effectué au moyen de l'apport de chaleur, pour la liquéfaction au moins partielle des parties (13).

2. Procédé selon la revendication 1, dans lequel
les parties (13) de la couche (2) comprennent également des parties du moyen de manipulation (3) se trouvant sur ou dans la couche (2) ou se composent exclusivement du moyen de manipulation (3).

3. Procédé selon la revendication 1 ou 2, dans lequel
l'enlèvement (S18) est effectué mécaniquement au moyen d'un dispositif d'enlèvement qui présente un élément de contact qui est en contact avec la surface de la couche (2), dans lequel la surface de la couche (2) et l'élément de contact se déplacent l'un par rapport à l'autre lors de l'enlèvement (S18).

4. Procédé selon la revendication 3, dans lequel
l'élément de contact présente une brosse fixe et/ou mobile (8) et/ou un élément de meulage et/ou un élément de rabotage, dans lequel, de préférence, la brosse (8) présente au moins en tant que brosse mobile (8) une brosse à disque et/ou une brosse à rouleau et/ou une bande de brosse et/ou en tant que brosse fixe (8) une barre (11) avec garniture de brosse, et/ou dans lequel
l'élément de contact, en particulier la brosse (8), présente des fibres textiles et/ou plastiques, en particulier des fibres de nylon, de l'anderlon, et/ou du métal, en particulier de l'acier, du laiton ou du cuivre, en tant que soies.

5. Procédé selon l'une quelconque des revendications précédentes, dans lequel
l'enlèvement (S18) comprend une aspiration des parties (13) par dépression, de préférence au moyen d'un dispositif d'aspiration, et/ou dans lequel le chauffage de la couche (2) et/ou du moyen de manipulation (3) est effectué au moyen de l'apport de chaleur, pour la liquéfaction au moins partielle du moyen de manipulation (3).

6. Procédé selon l'une quelconque des revendications 3 ou 4, dans lequel
une étape de nettoyage de l'élément de contact est effectuée.

7. Procédé selon l'une quelconque des revendications précédentes, dans lequel
l'enlèvement (S18) comprend l'affluage de la surface de la couche (2) et/ou du moyen de manipulation (3) avec un flux de fluide, en particulier avec un flux d'air.

8. Procédé selon la revendication 7, dans lequel
le flux de fluide percute en forme correspondante contre la surface de la couche (2) et/ou du moyen de manipulation (3) de sorte qu'il s'étende sur toute la largeur de la couche (2), et/ou dans lequel
le flux de fluide percute contre la couche (2) et/ou le moyen de manipulation (3) sous un angle qui est inférieur à 45°, de préférence inférieur à 30°, de manière particulièrement préférée inférieur à 15°.

9. Procédé selon la revendication 7 ou 8, dans lequel
le flux de fluide présente des corps solides qui présentent un diamètre de 0,0001 à 1 mm, de préférence de 0,001 à 0,5 mm, de manière particulièrement préférée de 0,005 à 0,3 mm, et/ou qui sont réalisés pour se liquéfier ou se vaporiser après avoir percuté contre la couche (2), et/ou qui sont exposés à un liquide lors de la distribution.

10. Procédé selon l'une quelconque des revendications précédentes, dans lequel
la couche (2) est au moins partiellement durcie avant l'application (S12) du moyen de manipulation (3), dans lequel on utilise à cet effet de préférence un rayonnement électromagnétique, en particulier un rayonnement UV.

11. Procédé selon l'une quelconque des revendications précédentes, dans lequel
le durcissement (S14) comprend une irradiation de la couche (2) et/ou du moyen de manipulation (3) par un rayonnement électromagnétique, de préférence par un rayonnement UV, et/ou une irradiation par un rayonnement électronique, et/ou dans lequel
le durcissement (S14) comprend un séchage actif et/ou passif et/ou un durcissement par réaction, de préférence par un système à deux composants, et/ou dans lequel
le durcissement (S14) est effectué après l'enlèvement (S18) jusqu'au durcissement final de la couche (2).

12. Procédé selon l'une quelconque des revendications précédentes, dans lequel
le moyen de manipulation (3) et la couche (2) sont réalisés de telle sorte qu'ils ne se lient pas l'un à l'autre pendant le durcissement (S14).

13. Dispositif pour la mise en oeuvre des procédés selon l'une quelconque des revendications 1 à 12, présentant :
- un dispositif de transport, qui est conçu pour transporter une pièce à fabriquer (1) vers d'autres éléments du dispositif, et/ou pour déplacer au moins un autre élément du dispositif vers la pièce à fabriquer (1) ;
- en tant qu'autre élément, un dispositif d'application (15), en particulier présentant un dispositif d'impression numérique, qui est conçu pour appliquer un moyen de manipulation (3) sur une couche (2) au moins partiellement liquide se trouvant sur la pièce à fabriquer (1) ;
- en tant qu'autre élément, un dispositif de durcissement, qui est conçu pour durcir la couche liquide (2) et le moyen de manipulation (3) ;
- en tant qu'autre élément, un dispositif d'enlèvement, qui est conçu pour enlever des parties (13) de la couche (2) mécaniquement et/ou de manière fluidique,
**caractérisé en ce que**
le dispositif comprend en outre un moyen de commande, qui est conçu pour commander le dispositif de transport et les autres éléments du dispositif, afin de mettre en oeuvre le procédé selon l'une quelconque des revendications 1 à 12, et **en ce que**
le dispositif d'enlèvement présente un dispositif de chauffage, qui est conçu pour chauffer la surface de la couche (2) et/ou le moyen de manipulation (3), afin d'obtenir une liquéfaction des parties de la couche (13).

14. Dispositif selon la revendication 13, dans lequel
le dispositif de transport présente un transport par bande, et/ou dans lequel
le dispositif de durcissement présente une source de rayonnement (12), de préférence pour un rayonnement électromagnétique, dans laquele la longueur d'onde du rayonnement émis peut de préférence être modifiée, et/ou dans lequel
le dispositif de durcissement présente un ventilateur, qui est conçu pour souffler un flux de fluide, en particulier un flux d'air, sur la couche (2) et/ou le moyen de manipulation (3) ; et/ou dans lequel
le dispositif d'enlèvement pour l'enlèvement mécanique présente un élément de contact, qui est conçu pour entrer en contact avec la surface de la couche (2) afin d'enlever des parties (13) de la couche (2) ; et/ou dans lequel
le dispositif d'enlèvement présente une buse (6), qui est conçue pour laisser s'affluer un flux de fluide, de préférence un flux d'air, sur la surface de la couche (2) afin d'enlever le moyen de manipulation (3), dans lequel le flux de fluide présente de préférence des corps solides qui présentent un diamètre de 0,0001 à 1 mm, de préférence de 0,001 à 0,5 mm, de manière particulièrement préférée de 0,005 à 0,3 mm ; et/ou dans lequel
le dispositif d'enlèvement présente un dispositif d'aspiration (7), qui est conçu pour aspirer le moyen de manipulation (3) de la couche (2) au moyen d'une dépression et/ou pour aspirer le moyen de manipulation (3) déjà dissous.

15. Dispositif selon la revendication 14, dans lequel
l'élément de contact présente une brosse fixe et/ou mobile (8) et/ou un élément de meulage et/ou un élément de rabotage, et/ou dans lequel
l'élément de contact, en particulier la brosse (8), présente des fibres textiles et/ou plastiques, en particulier des fibres de nylon, et/ou de l'anderlon et/ou du métal, en particulier de l'acier, du laiton ou du cuivre, en tant que soies.
